# EUROPEAN PATENT APPLICATION

(11) **EP 3 104 281 A1**
(43) Date of publication of application: **14.12.2016**
(21) Application number: 15305912.6
(22) Date of filing: 12.06.2015
(51) Int. Cl.: G06F 17/30

(54) **APPARATUS AND METHOD FOR PROCESSING RANKING EVOLUTION**

(71) Applicant: Thomson Licensing, 92130 Issy-les-Moulineaux (FR)
(72) Inventor: Jullian, Rémi, 35576 Cesson-Sévigné (FR); Jegou, Karine, 35576 Cesson-Sévigné (FR); Gendron, David, 35576 Cesson-Sévigné (FR); Gallardo, Patrick, 35140 Vendel (FR)
(74) Representative: Huchet, Anne

(57) **Abstract**

A method for processing lists of ranked elements. According to an analysis of a first list 220 of ranked elements and a second list 200, tags are associated with the elements, related to the evolution of the element in the ranked list and a third list 230 is generated, allowing to exhibit the evolution of a list of ranked elements for example by increasing the size of the elements that progressed and decreasing the size of elements that regressed in the ranking.

## Description

### TECHNICAL FIELD

The present disclosure relates generally to user interfaces and in particular to the processing of an evolving list of ranked elements.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Displaying lists of ranked elements is ubiquitous in today's computer systems, for example to represent the movie box-office sales, the top radio songs chart or the championship standings in many sports. The prior art comprises a number of different solutions that allow the processing of evolving list of elements.

One very common solution is to represent the elements in a simple list ordered according the ranking of the elements arranged vertically, one element per row. A more refined approach is to represent the elements under the form of images and scale the images regarding their ranking, possibly organized as a grid with decreasing row sizes so that the top element take much more space on the screen than elements further down in the list. This technique is particularly adapted when the elements to be represented are naturally available in a graphical form such as a movie poster. These techniques have the drawback of representing only a snapshot view of the list of elements, therefore they do not provide any insight about the evolution of these rankings.

To overcome this restriction, a very common solution is to add to each element of the list a symbol, often graphical, representing the evolution. For example, an up arrow indicates a progression of the element in the ranking whereas an arrow down indicates a regression and an horizontal line or equal sign represents stagnation. The amplitude of the variations can also be represented either by showing a variable number of arrows, or displaying a digital value showing the number of positions gained or lost. Purely textual solutions are also employed, for example "+4" indicating a progression of 4 positions while "-2" indicates a regression of 2 positions.

It can therefore be appreciated that there is a need for a solution that allows a more efficient representation of an evolving list of elements that addresses at least some of the problems of the prior art. The present disclosure provides such a solution.

### SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

In a first aspect, a method for processing a list of ranked elements, wherein the ranking of at least one element has been subject to change, being either increased or decreased, includes at a processor of an apparatus obtaining a first list of ranked elements, for each element of the first list comparing the position of the element with its position in a second list of ranked elements corresponding to the previous ranking, selecting a tag corresponding to the evolution of the element; and outputting a third list comprising the ranked elements of the first list and their tags.

In second aspect a data processing apparatus for processing a list of ranked elements, wherein the ranking of at least one element has been subject to change, being either increased or decreased, is described. An input interface obtains a first list of ranked elements. A processor, for each element of the first list, compares the position of the element to its position in a second list of ranked elements corresponding to the previous ranking, and selects a tag corresponding to the evolution of the element. An output interface outputs the third list comprising the ranked elements of the first list and their tags.

Additional features and advantages of the invention will be made apparent from the following detailed description of illustrative embodiments which proceeds with reference to the accompanying figures. It should be understood that the drawings are for purposes of illustrating the concepts of the disclosure and are not necessarily the only possible configuration for illustrating the disclosure.

### BRIEF DESCRIPTION OF DRAWINGS

Preferred features of the present disclosure will now be described, by way of non-limiting example, with reference to the accompanying drawings, in which
Figure 1 illustrates an exemplary system in which the solution of the disclosure may be implemented;
Figure 2 illustrates the use of multiple lists in an exemplary implementation of the invention;
Figures 3 illustrates an exemplary ranking scale and the tags associated to each of the different ranges;
Figure 4 illustrates the successive steps of the method for processing a list of evolving elements, according to the present disclosure;
Figure 5 complements figures 3 and 4 by detailing the comparison step 426 of figure 4 applied to the ranking scale of figure 3;
Figure 6 illustrates a preferred embodiment of the invention in the context of a movie on demand service provider;
Figure 7A and 7B show an example of evolution of lists of ranked element between two consecutive weeks, according the description of figure 6;
Figure 8 shows an alternate embodiment in which the additional size of the progressing elements is used to display additional information of the element.

### DESCRIPTION OF EMBODIMENTS

The present disclosure is about a method for processing lists of ranked elements. More precisely, according some analysis of the previous list of ranked elements and a new list, some tags are associated to the elements, related to the evolution of the element in the ranked list and an enhanced list is generated, allowing to exhibit the evolution of a list of ranked elements for example by increasing the size of the elements that progressed and decreasing the size of elements that regressed in the ranking.

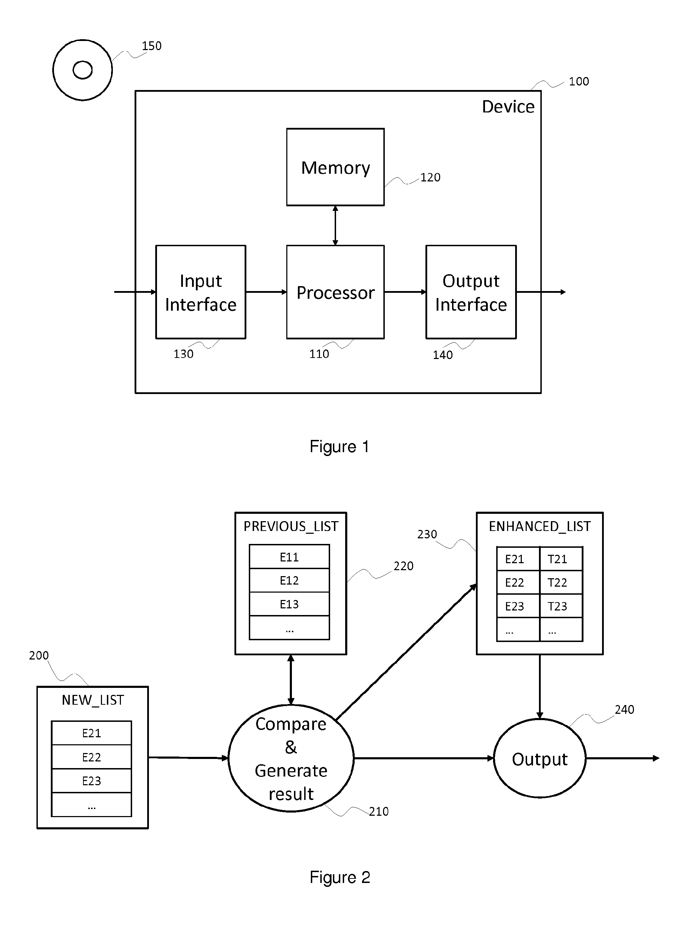

Figure 1 illustrates an exemplary apparatus in which the disclosure may be implemented. The device 100 preferably comprises at least one hardware processor 110 configured to execute the method of at least one embodiment of the present disclosure, memory 120, an input interface 130 for obtaining list of elements and an output interface 140 to output the result. Traditional communication interfaces using WiFi or Bluetooth protocols constitute examples of input and output interfaces. Many other such input and output interfaces may be used, consistent with the spirit of the invention. These interfaces provide support for higher level protocols such as various internet protocols in order to allow the device 100 to exchange data and interact with other devices. The non-transitory computer readable storage medium 150 stores computer readable program code that is executable by the processor 110. The skilled person will appreciate that the illustrated device is very simplified for reasons of clarity.

Figure 2 illustrates the use of multiple lists in an exemplary implementation of the present disclosure. Lists of elements are updated independently of the disclosure. The processor obtains a new list 200 and compares it, in step 210, with the previous version of the list 220. Through this comparison, an enhanced list 230 is generated and will serve a basis for outputting the result, in step 240. The present disclosure is using the concept of tags associated to each element and stored along each element in the enhanced list 230. These tags aim at characterizing the evolution of the list which will allow to visualize this evolution, for example by representing differently the elements that showed important progress.

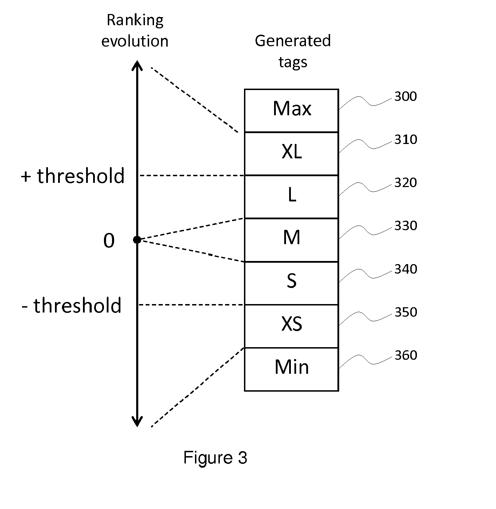

Figures 3 illustrates an exemplary ranking scale and the tags associated to each of the different ranges. The vertical axis shows the amount of ranking evolution, in other words the number of positions gained or lost by comparing the new ranking of an element to its previous ranking. This value is simply computed for each element by subtracting the new position from the previous position. Positive value indicates a progress, negative values indicates a decline and zero indicates nothing changed. A particular threshold value T is defined. When the element ranking did not change, its ranking evolution value is equal to 0 and we associate this to the "*M*" tag 330. When the element gained some positions, we associate the range of values to the "L" tag 320 when the elements gained T elements or less and the "XL" tag 310 when it gained more than T elements.. Similarly, when the element lost positions, we associate the range of values to the "S" tag 340 when the elements lost T elements or less and the *"XS"* tag 350 when it lost more than T elements. The elements no more appearing in the new list but present in previous list are associated to the "*MIN*" tag 360, while the new elements will be associated to the "*MAX*" tag 300. The man skilled in the art will understand that the range exhibited in Figure 3 is only an example and more complex functions may be used to convert from ranking evolution to tags. Furthermore, the name of the tags should only be considered as an example. Infinite possibilities can be imagined by the reader.

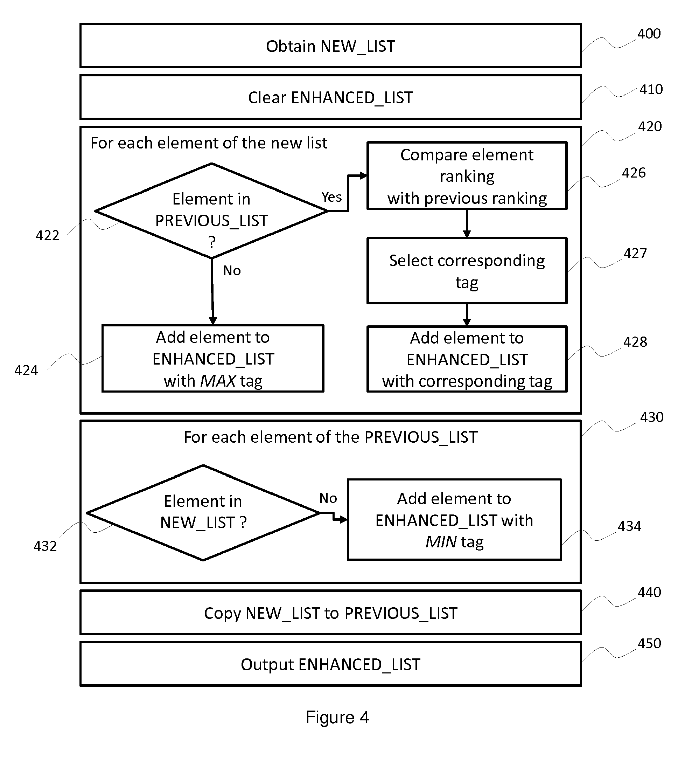

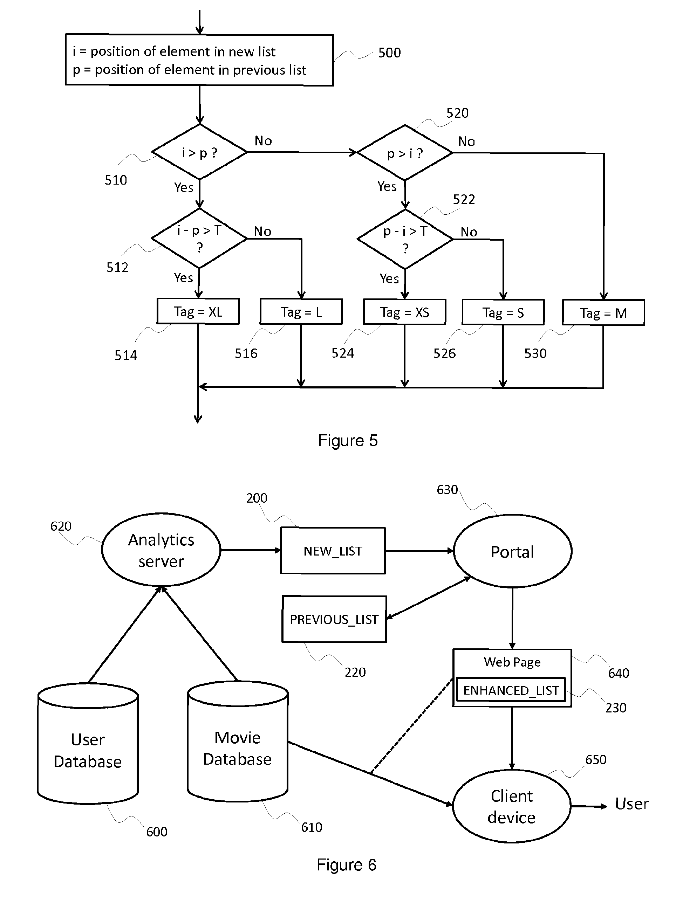

Figure 4 illustrates the successive steps of the method for processing a list of evolving elements, according to the present disclosure. In step 400, a new list 200 is obtained. This step can either be triggered externally i.e. when the list of elements is updated, the new version is pushed to the input interface 130, or internally i.e. the input interface scans periodically if the list of elements has been updated. The enhanced list 230 is then cleared in step 410. This list will constitute the basis for generating the output result to be provided to the user. Step 420 is then iterated for each element of the new list 200, with the goal of characterizing the evolution of the element. First it is checked, in step 422, if the element is present in the previous list 220. If it is not the case, then the element is a new element and therefore it is added, in step 424 to the enhanced list 230 with the *"MAX"* tag. When the element was present in the previous list 220, its new ranking is compared to the previous ranking, in step 426, and the corresponding tag to be associated to this element will be selected, in step 427. This choice will be described in Figure 5. In step 428, the couple composed of the element and the corresponding tag is then added to the enhanced list 230. When step 420 has been iterated for all elements of the new list 200, step 430 is iterated for each element of the previous list 220 with the goal of listing the elements that have been removed from the ranking. For that, in step 432, it is checked if the element is present in the new list. If it is not the case, then the element is added, in step 424 to the enhanced list 230 with the *"MIN"* tag. This will allow to indicate that these elements are no longer part of the list and risk to disappear completely at the next update. When step 430 has been iterated for all elements of the previous list 220, the new list 200 is copied to the previous list 220, in step 440, in order to be ready for the next update. In step 450, the list is provided to the user. This last operation preferably takes the form of a graphical representation displayed on the screen but other means for displaying it can be used such as providing a textual file to be interpreted by another device.

Figure 5 complements figures 3 and 4 by detailing the comparison step 426 of figure 4, applied to the ranking scale of figure 3. This comparison applies to a single element. First, in step 500, the position of the element in both new list 200 and the previous list 220 are obtained and respectively affected to the variables i and p. Both variables are first compared in step 510. When i>p, the element has progressed in the list. The amount of progress is tested in step 512 by comparing it to a pre-defined threshold T. If greater than the threshold T, then the progress is considered to be very significant and the tag to be used is *"XL",* affected in step 514, else the progress is considered to be important and the tag to be used is "L", affected in step 516. Both variables are compared again in step 520. When p>i, the element has regressed in the list. The amount of decline is tested in step 522 by comparing it to the threshold T. If greater than the threshold T, then the decline is considered to be very significant and the tag to be used is "XS", affected in step 524, else the decline is considered to be important and the tag to be used is "S", affected in step 526. Finally the result of the comparison in step 520 is null when the position of the element did not change. In this case, the tag to be used is "*M*", affected in step 530. At the end of this comparison stage, the evolution of the element has been characterised through the tag that has been chosen in the range of available tags.

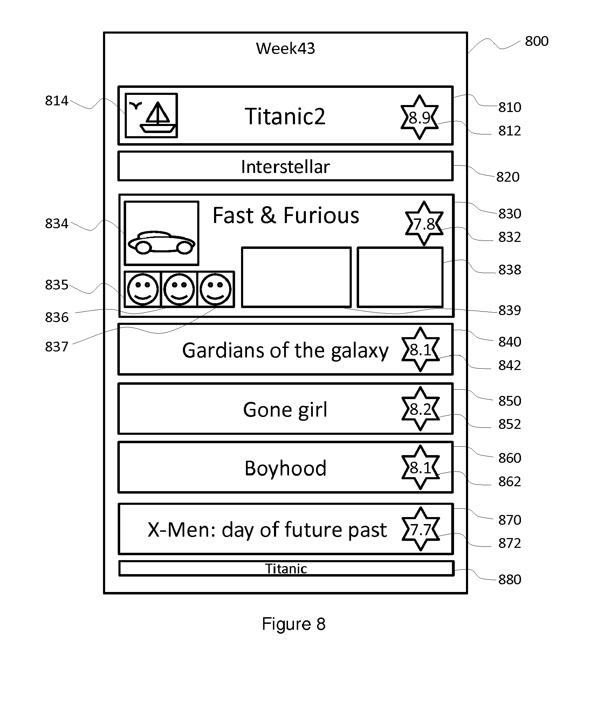

In a preferred embodiment illustrated in figure 6, the present disclosure is implemented in an online environment where a service provider delivers movie on demand services to users. In such domain, providers generally suggest some recommendations to their users by showing them what movie has been the most watched. This is done here by handling a list of on-demand movies, ranked according their number of visualization by different users. The list is updated weekly and published onto the on-demand movie portal. The provider manages a user database 600 that records the user activities such as watching a given movie at a given time. The provider has access to a movie database 610 that includes additional information that might be shown to the user when required, such as a picture representing the movie poster the movie genre, the list of actors, the ratings given by users, and many other information related to the movie. It can also include trailers as well as the movie itself. The provider also handles an analytics server 620 that performs analytics on these databases. The goal of these analytics can comprise learning the user habits or preferences and suggesting recommendations. For that purpose, the analytics server 620 generates regularly, say once per week, a new list 200 of movies ranked according their number of visualizations by different users. This list is analysed by the portal 630, using the previous list 220 to generate an enhanced list 230, as described in figures 4 and 5. The enhanced list is embedded in a web page 640, for example according the HTML5 specification with the data to be displayed being described in the HTML file and a corresponding presentation style defined in a CSS file. The tags selected according to the description of figures 4 and 5 are embedded in the HMTL5 file to characterize the elements and correspond to particular styles defined in the css file. The HTML file preferably contains references to the movie database. The client device 650, for example a computer or tablet, is running a browser that interprets the web page 640 obtained from the portal and displays the ranked list of movies, showing the evolution of movies, as illustrated in figure 8 hereinafter. In figure 6, the device is interconnected using a traditional network such as internet.

In the preferred embodiment, the previous list 220 is updated each time a new list 200 is available. Such behaviour reflects the evolution of the list continuously, independently of user activity. For example when the user does not access the portal for a long time, say multiple updates of the list, he may be surprised by the evolution since it does not correspond to the evolution he is currently facing. To overcome this issue, an alternate embodiment proposes to keep a separate previous list 220 for each user, preferably recorded with the user data stored in the database 600. When the user accesses the list of movies, he is proposed to choose between the overall evolution or a more individualized evolution according his own activity on the portal. In the first case, the new list is compared to the global previous list and therefore reflects the latest global evolution. In the latter case, the new list is compared to his previous list and therefore reflects perfectly the evolution between updates. At this moment, the previous list will be updated to prepare the next access. Another advantage with this embodiment is that it avoids to record the list on the client device, which is always good for the performances of mobile devices but is also interesting in the case of multiple devices using the same account. For this embodiment, an identification of either the user or of the device operated by the user may be required by the service provider to propose the list of movies. This identification can be performed using well known prior art solution such a login/password or the use a smartcard-based identification device.

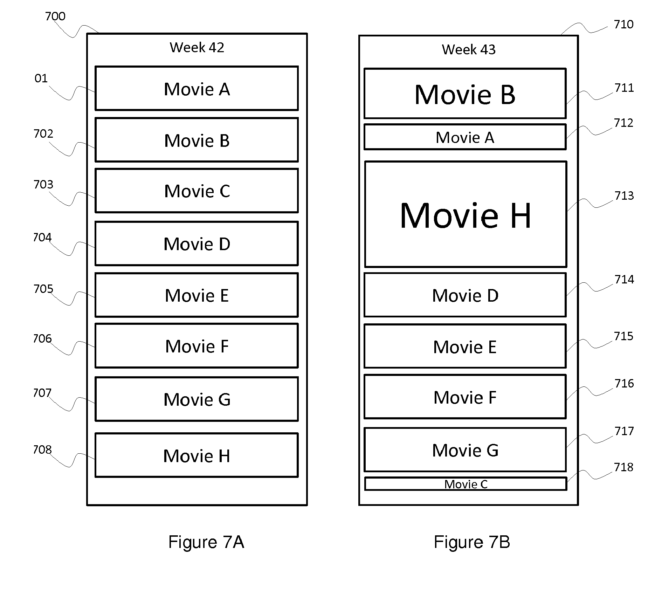

Figure 7A and 7B show an example of evolution of lists of ranked element between two consecutive weeks, according the description of figure 6 and corresponding to step 450 in figure 4. Both figures show the ranked list of movies as provided by the portal to the user through the browser of its client device. In Figure 7A, the list 700 shows the ranking for the calendar week 42, taken as reference to compute the evolution of the ranking. It lists 8 movies named "Movie A" 701 to "Movie H" 708. For the sake of simplicity, it is considered that all these elements did not evolve compared to the previous week. Therefore, all the tags for these elements are set to "*M*" and all these elements are displayed with the same medium size. In Figure 7B, the list 710 shows the ranking for the calendar week 43. The reader will appreciate that this example of implementation of the disclosure exhibits the evolution of a list of ranked elements by increasing the size of the elements that progressed and decreasing the size of elements that regressed in the ranking. The key element is the definition of the tag associated with each element of the list. This is done according to the ranges defined in Figure 3 and to the comparison detailed in figure 5. In this example, the value chosen for the threshold T is 3. The first element is now "Movie B" 711 that gained one position compared to previous ranking. As a result, the comparison described in figure 5 will affect the corresponding tag to "L" (branch 516 of figure 5) to the element 711 that is then is shown bigger than the medium-sized elements. In contrary, the second element "Movie A" lost one place. It is tagged with "S" (branch 526 of figure 5) and will be shown smaller than medium-sized elements. The third element is "Movie H" that gained 5 positions in the ranking. As a result, it is tagged with *"XL"* (branch 514 of figure 5) and will be displayed much bigger than the other elements. The fourth element, fifth, sixth and seventh elements, respectively numbered 714, 715, 716 and 717, did not gain or loose any position in the ranking. Therefore, these elements are tagged with "*M*" (branch 530 of figure 5) and will be displayed with medium size. Finally, the last element "Movie C" has lost 5 positions. As a result, it is tagged with "XS" (branch 524 of figure 5) and will be shown much smaller than the other elements.

Figure 8 shows an alternate embodiment in which the additional size of the progressing elements is used to display additional information of the element, extracted from the movie database 610 introduced in Figure 6. The elements of the list 800 are based on the same example of evolution than the Figure 7B. The first element 810 is an example of element tagged "L". In addition to the movie title, a user rating level 812 and the movie poster 814 are shown. This brings more emphasis to the movie whose ranking has progressed in the list. The second element 820 is tagged "S" and no additional data is displayed. The third element is an example of element tagged *"XL".* The element shows the movie title, the movie poster 834, a user rating level 832, pictures of the main characters 835, 836, 837, a textual summary 838 of the movie and some user provided comments 839 on the movie. The elements 840, 850, 860 and 870 are tagged "*M*" and so only the title and the user rating level 842, 852, 862 and 872 are displayed. The last element 880 of the list is tagged "XS" and appears much smaller than the other elements with no additional information.

In the preferred embodiment, the evolution is highlighted by changing the size of the elements. The one skilled in the art will appreciate that other techniques could apply, while staying in the spirit of the invention. For example the evolution could be given by different colors or shades of gray to be applied to the element, or simply by changing the brightness of the element. If the interface is sound based and not graphic, the voice tone could change according the tags, from a happy voice tone to a sad voice tone for example. Finally, for a text-based interface, the evolution could be visualized by varying the font size of the elements.

The notion of tags splits the functionalities between the characterisation of the evolution and its representation. This can provide better separation between the software embodiment that will implement the overall functionality: calculations can be done at server side, and representation is the responsibility of the client side.

As will be appreciated by one skilled in the art, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized. It will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method for processing a list of ranked elements, comprising at a processor (110) of an apparatus (100):
- obtaining a first list (400) of ranked elements;
- for each ranked element of the first list (200):
- comparing (426) the position of the ranked element with its position in a second list (220) of ranked elements corresponding to a previous ranking;
- selecting (427) a tag corresponding to the evolution of the position of the element; and
- outputting (450) a third list (230) comprising the ranked elements of the first list and their tags.

2. Method of claim 1 where the second list (220) is common to at least two users or devices.

3. Method of claim 1 where the second list (220) is selected from a set of lists according to an identification of a user or a device.

4. Method according to any one of claims 1 to 3 where the tags are selected according to the difference between the position of the ranked element in the second list (220) and the position of the ranked element in the first list (200) and where:
- a first tag is selected when the difference is null;
- a second tag is selected when the difference is positive; and
- a third tag when the difference is negative.

5. Method of any one of claims 1 to 4 where the third list (230) of ranked elements is displayed on a screen and where the tags associated to the elements are defining the size of the graphical representation of the elements.

6. A data processing apparatus (100) for processing a list of ranked elements, comprising:
- an input interface (130) configured to obtain a first list of ranked elements;
- a processor (110) configured to:
- for each ranked element of the first list (200):
- compare the position of the ranked element to its position in a second list (220) of ranked elements corresponding to the previous ranking;
- select (427) a tag corresponding to the evolution of the position of the ranked element;
- an output interface (140) configured to output the third list (230) comprising the ranked elements and their tags.

7. The device of claim 6 wherein the processor (110) is configured to select the tags according to the difference between the position of the ranked element in the second list (220) and the position of the ranked element in the first list (200) and where:
- a first tag is selected when the difference is null;
- a second tag is selected when the difference is positive; and
- a third tag when the difference is negative.

8. The device of claim 7 wherein the processor (110) is configured to select the tags according to the difference between the position of the ranked element in the second list (220) and the position of the ranked element in the first list (200) and where:
- a fourth tag is selected when the difference is positive and greater to a determined threshold; and
- a fifth tag is selected when the difference is negative and its absolute value is greater to a determined threshold.

9. The device of any one of claims 6 to 8 wherein the processor (110) is configured to check, for each ranked element of the second list (220), if the ranked element is no more present in the first list (200) and if this is the case, to add the element at the end of the third list (230) with a specific tag (360).

10. The device of any one of claims 6 to 9 wherein the processor (110) is configured to associate a specific tag (300) to the ranked elements of the third list (230) for each ranked element of the first list (200) that is not present in the second list (220).

11. The device of any one of claims 6 to 10 wherein the processor (110) is configured the display the third list (230) of ranked elements on a screen and where the tags associated to the elements are defining the size of the graphical representation of the elements.

12. Computer program comprising program code instructions executable by a processor (110) for implementing the steps of a method according to at least one of claims 1 to 5.

13. Computer program product which is stored on a non-transitory computer readable medium (150) and comprises program code instructions executable by a processor (110) for implementing the steps of a method according to at least one of claims 1 to 5.
